# EUROPÄISCHE PATENTSCHRIFT

(11) **EP 0 251 217 B1**
(45) Veröffentlichungstag und Bekanntmachung des Hinweises auf die Patenterteilung: **03.03.1993**
(21) Anmeldenummer: 87109161.7
(22) Anmeldetag: 25.06.1987
(51) Int. Cl.: B29C 67/14

(54) **Gehäusebauteil aus laminiertem Mehrlagengewebe**
Building element made from a laminated multilayer fabric
Elément de construction en tissu multicouche laminé

(30) Priorität: 02.07.1986 DE 8617619 U
(43) Veröffentlichungstag der Anmeldung: 07.01.1988
(73) Patentinhaber: Vorwerk & Co. Interholding GmbH, D-42275 Wuppertal (DE)
(72) Erfinder: Böttger, Wolfgang, D-8651 Ködnitz (DE); Biedermann, Kurt, D-8650 Kulmbach (DE)

(56) Entgegenhaltungen:
- EP-A- 0 056 351
- CA-A- 1 076 928
- DE-A- 3 329 740
- FR-A- 2 568 275
- GB-A- 1 589 468
- US-A- 1 392 535
- US-A- 2 862 283
- US-A- 3 670 504
- US-A- 4 131 664
- US-A- 4 510 198

## Beschreibung

Die Erfindung bezieht sich auf ein Gehäusebauteil, wie Kraftfahrzeugmotorhaube und/oder -kotflügel oder ähnliches, aus laminiertem Mehrlagengewebe, bei dem eine gewebte, mehrlagige Einlage in Laminiermittel eingebettet ist und dessen Kontur in eine vorgegebene Form gebracht ist.

Derartige Gehäusebauteile sind bekannt, indem man ein vorgefertigtes, kontinuierliches Flachgewebe laminiert und in Formen sogenannte "Halbzeuge" hieraus herstellt. Hierzu verwendet man ein Mehrlagengewebe z.B. nach der EP 0056 351, welches beidseitig eine grob strukturierte, gleichartige Oberfläche aufweist.

Derartige Lösungen haben den Nachteil, daß, bedingt durch die beidseitige Gleichartigkeit der Gewebestruktur eine relativ schlechte flächige Verformbarkeit sowie eine schlechte Oberflächenstruktur nach der Laminierung gegeben ist, so daß hochwertige Sichtflächen nicht mit dieser Methode erzielt werden können.

Ein weiterer Nachteil liegt in der mangelnden Verformbarkeit, die es nicht gestattet, bezogen auf die Sichtfläche, viele Verformungen ohne sichtbare Qualitätsminderung einzubeziehen.

Bezogen auf die vorgenannten Punkte bietet sich, bedingt durch die in verschiedenen Branchen notwendigen Sichtflächen, eine mangelnde Materialfestigkeit, die neben den optisch wirksamen Sichtflächen auch bei fertig laminierten Gehäusebauteilen von großer Wichtigkeit ist.

Die Erfindung hat sich nun zur Aufgabe gestellt, ein gewebtes Gehäusebauteil zu schaffen, welches unter Vermeidung der vorgenannten Nachteile eine glatte Sichtoberfläche aufweist und gleichzeitig gut verformbar ist, wobei eine sehr hohe Materialfestigkeit angestrebt wird.

Erfindungsgemäß wird diese Aufgabe dadurch gelöst, daß die Einlage aus mindestens zwei untereinander verbundenen Lagen besteht, wobei die obere Lage eine sehr feine und die untere Lage eine grobe Struktur aufweist.

Ein weiterer erfindungsgemäßer Lösungspunkt ist dadurch gegeben, daß die sehr feine Lage die Gehäusebauteiloberfläche bildet und daß die grobe Lage sehr verformbar ausgebildet ist.

Nach einem weiteren Gedanken der Erfindung ist es angezeigt, daß die Zwischenlagen in bezug auf die obere Lage und die untere Lage in ihrer Verformbarkeit aufeinander abgestuft ausgebildet sind und daß zur Erzielung der hohen Festigkeit es notwendig ist, daß die Lage eine sehr hohe Gewebematerialdichte aufweist.

Nach dem letzten Gedanken der Erfindung ist es angezeigt, daß das Laminiermittel vollständig gleichmäßig im Gewebegefüge eingebettet ist.

Die mit der Erfindung erzielten Vorteile liegen insbesondere darin begründet, daß hier ein laminiertes Gehäusebauteil gefunden wurde, welches eine nahezu glatte Oberfläche bietet unter gleichzeitigen guten Verformungseigenschaften und in der Oberfläche angeordneter hoher Festigkeit. Diese Vorteile werden ergänzt durch die leichte Bauweise unter Beibehaltung einer Eigenschaft, die sonst nur bei anderen Materialien, wie z.B. Stahlblech, vorhanden ist. Ein weiterer Vorteil liegt in der Korrosionsbeständigkeit gegenüber Umwelteinflüssen, bezogen auf herkömmliche Materialien. Darüber hinausgehend bietet sich ein wirtschaftlicher Vorteil bezogen auf die Fertigung, indem das Gewebe in eine Form eingelegt und dann mit entsprechenden Materialien laminiert wird, ohne die herkömmlichen Methoden, wie Stanzen und Pressen, die einen hohen Energieaufwand bedingen, zu benutzen.

Anhand der beigefügten Zeichnung soll die Erfindung verdeutlicht werden.

Es zeigt:

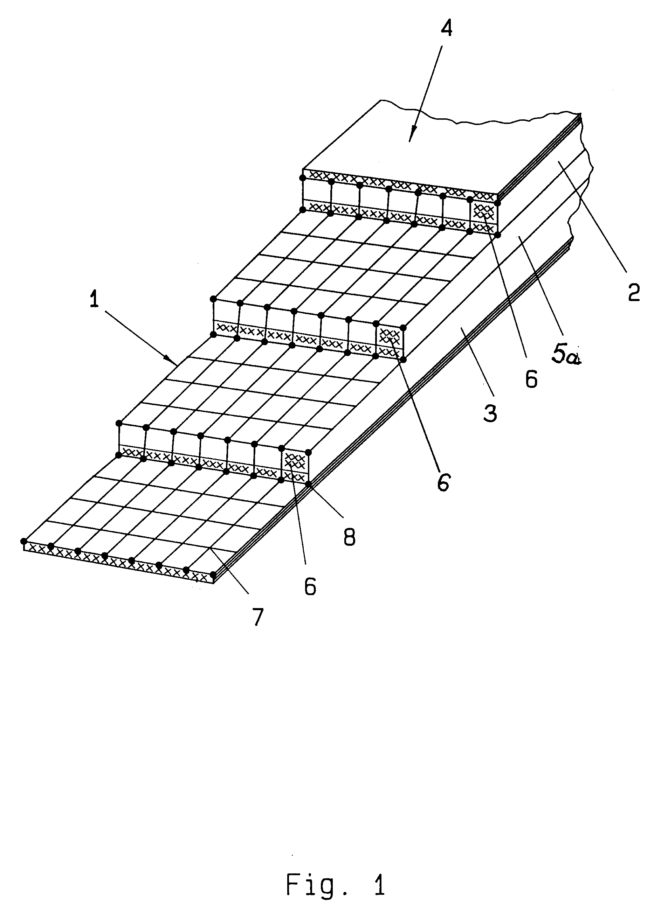

- Fig. 1:: eine schematische Darstellung eines erfindungsgemäßen laminierten Gehäusebauteils aus Mehrlagengewebe

Fig. 1 zeigt in schematischer Form ein erfindungsgemäßes Gehäusebauteil, bei dem mit (1) die gesamte gewebte Einlage bezeichnet wurde. Diese gewebte Einlage (1) besteht im Beispiel aus drei Lagen (2), (5a), (3), wobei die Lage (2) eine sehr feine Webstruktur und die Lage (3) die gröbste Webstruktur aufweist. Die dazwischen angeordnete Lage (5a) ist auf die obere und die untere Lage (2) bzw. (3) in ihrer Struktur abgestimmt. Alle Lagen (2), (5a) und (3) sind webtechnisch in an sich bekannter Art und Weise als sogenannte "Mehrlagengewebe" ausgebildet, indem die einzelnen Lagen durch sogenannte Verbindungsstege (8), wie sie aus dem Baugewerbe bekannt sind, miteinander in Verbindung stehen.

Derartige Gehäusebauteile werden nunmehr mittels geeigneter Harze laminiert, indem man das vorgenannte Mehrlagengewebe bzw. die vorgenannte Einlage (1) in einer Form harzt und in dieser Form aushärten läßt in die bestimmte Endform.

Hierbei ist es von Wichtigkeit, daß die, die feine Struktur aufweisende obere Lage (2) dem Laminiermittel (6) sehr gut zugänglich gemacht wird. Aus diesem Grund werden die darunterliegenden Zwischenlagen, wie hier die Lage (5a), abgestuft webtechnisch immer grober ausgeführt. Gleichzeitig erreicht man hiermit, daß sich die sehr hohe Gewebefestigkeit, insbesondere die Materialdichte, in der oberen Lage (2) ergibt und die folgenden beliebigen Zwischenlagen sowie die untere Lage (3) äußerst elastisch sind und so jeder gewünschten Laminierform angepaßt werden kann.

Derartige, mittels dieser Gewebeart hergestellte Gehäusebauteile können in einem Arbeitsgang zu laminierten Gehäusebauteilen hergestellt werden, die in ihrer Verarbeitung einfach zu handhaben sind und nach ihrer Fertigstellung eine glatte, sehr feste Oberfläche aufweisen. Insbesondere dienen derartige Gehäusebauteile als Karosserieteile, deren Oberfläche als Sichtflächen, die ausgeformt eine absolut glatte Struktur aufweisen müssen; wohingegen es auf die innere Oberflächenstruktur nicht ankommt - ja diese grobe Struktur technisch noch zur Geräuschminderung ausgenutzt werden kann.

## Patentansprüche

1. Gehäusebauteil, wie Kraftfahrzeugmotorhaube und/oder -kotflügel oder ähnliches, aus laminiertem Mehrlagengewebe, bei dem eine gewebte, mehrlagige Einlage in Laminiermittel eingebettet ist und dessen Kontur in eine vorgegebene Form gebracht ist, dadurch gekennzeichnet, daß die Einlage (1) aus mindestens zwei untereinander verbundenen Lagen (2,3) besteht, wobei die obere Lage (2) eine sehr feine und die untere Lage (3) eine grobe Struktur aufweist.

2. Gehäusebauteil nach Anspruch 1, dadurch gekennzeichnet, daß die sehr feine obere Lage (2) die Bauteiloberfläche (4) bildet.

3. Gehäusebauteil nach Anspruch 1, dadurch gekennzeichnet, daß die untere Lage (3) sehr verformbar ausgebildet ist.

4. Gehäusebauteil nach Anspruch 1, dadurch gekennzeichnet, daß in bezug auf die obere Lage (2) und die untere Lage (3) Zwischenlagen (5a) in ihrer Verformbarkeit aufeinander abgestuft angeordnet sind.

5. Gebhäusebauteil nach einem der Ansprüche 1 bis 4, dadurch gekennzeichnet, daß die Lage (2) eine sehr hohe Gewebematerialdichte aufweist.

6. Gehäusebauteil nach einem der Ansprüche 1 bis 5, dadurch gekennzeichnet, daß das Laminiermittel (6) vollständig gleichmäßig im Gewebegefüge (7) eingebettet ist.

## Claims

1. A housing component such as a motor vehicle engine hood and/or fender or similar of laminated multi-layer fabric in which a woven multi-layer insert is embedded in laminating agent and the contour of which has been given a predetermined form, characterized in that the insert (1) consists of at least two layers (2, 3) connected to each other, the upper layer (2) exhibiting a very fine structure, whereas the lower layer (3) has a coarse structure.

2. A housing component according to claim 1, characterized in that the very fine upper layer constitutes the component surface (4).

3. A housing component according to claim 1, characterized in that the lower layer (3) has been designed so as to be highly ductile.

4. A housing component according to claim 1, characterized in that in respect to both the upper layer (2) and the lower layer (3) intermediate layers (5a) are arranged such that their ductilities are graduated with regard to each other.

5. A housing component according to any of the claims 1 through 4, characterized in that the layer (2) has a very high fabric material density.

6. A housing component according to any of the claims 1 through 5, characterized in that the laminating agent (6) is embedded in the fabric texture (7) in a completely homogeneous fashion.

## Revendications

1. Composant de boîtier, comme le capot et/ou l'aile d'un véhicule automobile ou un élément similaire, en tissu multicouche laminé, dans lequel une garniture multicouche tissée est insérée dans un agent de stratification et dont le contour a une forme prédéterminée, caractérisé par le fait que la garniture (1) est composée d'au moins deux couches reliées l'une à l'autre (2,3), la couche supérieure (2) présentant une structure très fine, tandis que la couche inférieure (3) présente une structure grossière.

2. Composant de boîtier conforme à la revendication 1, caractérisé par le fait que la couche supérieure très fine (2) constitue la surface du composant.

3. Composant de boîtier conforme à la revendication 1, caractérisé par le fait que la couche inférieure (3) est conçue de manière à être très ductile.

4. Composant de boîtier conforme à la revendication 1, caractérisé par le fait qu'en ce qui concerne les couches supérieure (2) et inférieure (3), des couches intermédiaires (5a) sont disposées de manière à ce que la ductilité de l'une par rapport à l'autre soit échelonnée.

5. Composant de boîtier conforme à l'une des revendications 1 à 5, caractérisé par le fait que la densité du tissu de la couche (2) est très élevée.

6. Composant de boîtier conforme à l'une des revendications 1 à 5, caractérisé par le fait que l'agent de stratification (6) est inséré de manière entièrement homogène dans la texture du tissu (7).
